# DEMANDE DE BREVET EUROPEEN

(11) **EP 4 261 078 A1**
(43) Date de publication de la demande: **18.10.2023**
(21) Numéro de dépôt: 23167751.9
(22) Date de dépôt: 13.04.2023
(51) Int. Cl.: B60L 50/71, B60L 58/30, B60L 55/00, B60L 9/00, C25B 15/02, H01M 8/04, H01M 16/00, H02J 7/34, H01M 8/04858, H01M 8/04746, H01M 8/04082

(54) **UTILISATION SPÉCIFIQUE D'UN VÉHICULE À PILE À COMBUSTIBLE COMME SOURCE D'ÉLECTRICITÉ AUTONOME**

(30) Priorité: 15.04.2022 FR 2203526
(71) Demandeur: Powidian, 37700 La Ville aux Dames (FR)
(72) Inventeur: BOURGEAIS, Jean-Marie, 37700 LA-VILLE-AUX-DAMES (FR)
(74) Mandataire: Lavoix

(57) **Abrégé**

La présente invention concerne l'utilisation d'un véhicule à pile à combustible (10) comme source d'électricité autonome, la source d'électricité étant de préférence un groupe électrogène, l'utilisation comportant l'emploi d'un système d'alimentation en combustible (30) de la pile à combustible (16) extérieur au véhicule à pile à combustible (10).

## Description

La présente invention concerne une utilisation d'un véhicule à pile à combustible. La présente invention se rapporte aussi à des dispositifs associés, à savoir une source d'électricité, un véhicule à pile à combustible et un ensemble.

Dans le contexte de préservation de l'écologie, il est souhaitable de développer des véhicules, et notamment des véhicules automobiles, fonctionnant sans pétrole.

En particulier, il est connu d'utiliser des véhicules à pile à combustible ou des véhicules électriques à pile à combustible. De tels véhicules reposent sur un système d'alimentation en énergie électrique d'un moteur électrique, le système d'alimentation comportant une pile à combustible, et éventuellement une batterie ou un supercondensateur.

De nouveaux combustibles sont envisageables, comme en particulier l'hydrogène, le méthanol, l'éthanol ou l'acide formique. Cela permet d'obtenir un véhicule présentant un meilleur bilan carbone par rapport aux véhicules à moteur à combustion interne.

Pour améliorer ce bilan carbone, de nombreuses voies sont explorées comme l'allègement des véhicules ou l'amélioration des rendements des piles à combustibles.

Néanmoins, il existe un besoin pour améliorer encore le bilan carbone des véhicules à pile à combustible.

A cet effet, la description décrit une utilisation d'un véhicule à pile à combustible comme source d'électricité autonome, la source d'électricité étant de préférence un groupe électrogène, l'utilisation comportant l'emploi d'un système d'alimentation en combustible de la pile à combustible extérieur au véhicule à pile à combustible.

Il est ainsi proposé d'améliorer le bilan carbone des véhicules à pile à combustible en augmentant leurs fonctionnalités. Le véhicule pourra à la fois servir de véhicule avec ses usages traditionnels et servir de générateur électrique. Cette fonctionnalité spécifique permet d'augmenter l'utilisation d'un même véhicule, ce qui rend le véhicule considéré plus vert au sens écologique du terme.

Dans une telle utilisation, il convient de comprendre que la pile à combustible du véhicule est une source d'électricité autonome. Ceci implique que la pile à combustible est bien la seule alimentation utilisée et pas une simple alimentation auxiliaire.

En particulier, du fait de ce caractère autonome, la pile à combustible n'est pas contrôlée par un circuit extérieur pouvant contrôler l'énergie fournie par la pile à combustible.

Selon des modes de réalisation particuliers, l'utilisation du véhicule à pile à combustible présente une ou plusieurs des caractéristiques suivantes, prise(s) isolément ou selon toutes les combinaisons techniquement possibles :
- l'emploi d'un circuit de restitution de l'énergie électrique produite par la pile à combustible.
- le circuit de restitution de l'énergie électrique est extérieur au véhicule à pile à combustible.
- le système d'alimentation en combustible comporte au moins un réservoir en combustible et un circuit de contrôle de la quantité de combustible délivrée par le système d'alimentation en combustible.
- le circuit de restitution de l'énergie électrique comporte un onduleur, en particulier un onduleur triphasé.
- le véhicule à pile à combustible comporte un circuit d'alimentation en combustible alimentant la pile à combustible, le système d'alimentation en combustible étant raccordé au circuit d'alimentation en combustible.
- le véhicule à pile à combustible comporte une entrée d'insertion du combustible, le système d'alimentation en combustible étant raccordé par un conduit à l'entrée d'insertion.
- le véhicule à pile à combustible comporte un circuit de distribution électrique alimenté par la pile à combustible, le circuit de restitution de l'énergie électrique étant raccordé au circuit de distribution électrique de la pile à combustible.
- le véhicule à pile à combustible comporte une sortie électrique connectée au circuit de distribution électrique, le circuit de restitution de l'énergie électrique étant raccordé par un câble électrique à la sortie électrique.
- le véhicule à pile à combustible comporte une pluralité d'éléments présentant un premier mode de fonctionnement et un deuxième mode de fonctionnement, l'utilisation comportant l'emploi d'un système de contrôle, le système de contrôle étant propre à faire basculer les éléments d'un mode de fonctionnement à l'autre mode de fonctionnement, le premier mode de fonctionnement correspondant à un fonctionnement de véhicule à pile à combustible et le deuxième mode de fonctionnement correspondant à un fonctionnement de source d'électricité autonome, et
- le combustible est du dihydrogène.

La description propose également une source d'électricité autonome, la source d'électricité étant de préférence un groupe électrogène, comportant un véhicule à pile à combustible.

La description décrit aussi un véhicule à pile à combustible comportant une pluralité d'éléments présentant un premier mode de fonctionnement et un deuxième mode de fonctionnement, le premier mode de fonctionnement correspondant à un fonctionnement de véhicule à pile à combustible et le deuxième mode de fonctionnement correspondant à un fonctionnement de source d'électricité autonome.

La description propose également un ensemble interagissant avec un véhicule à pile à combustible utilisable comme source d'électricité autonome, l'ensemble comportant un système d'alimentation en combustible de la pile à combustible destiné à être raccordé au véhicule à pile à combustible et un circuit de restitution de l'énergie électrique produite par la pile à combustible destiné à être relié au véhicule à pile à combustible.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un véhicule à pile à combustible et d'un ensemble, et
- la figure 2 est une représentation schématique d'une partie de l'ensemble de la figure 1.

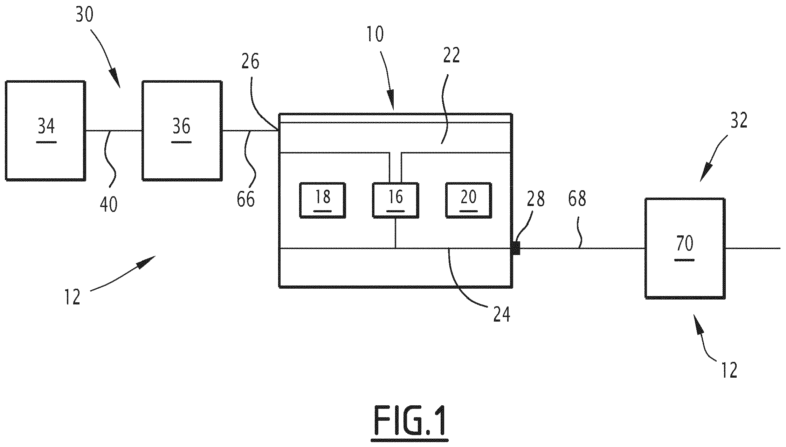

Un véhicule à pile à combustible 10 et un ensemble 12 sont représentés schématiquement sur la figure 1.

Dans la suite, pour alléger les notations, le véhicule 10 à pile à combustible est plus simplement dénommé « véhicule 10 ».

Le véhicule 10 est, par exemple, un véhicule automobile, tel une voiture.

Comme son nom l'indique, le véhicule 10 comporte une pile à combustible 16.

Une pile à combustible 16 est un générateur dans lequel la fabrication de l'électricité se fait grâce à l'oxydation sur une électrode d'un combustible réducteur couplée à la réduction sur l'autre électrode d'un oxydant.

Autrement formulé, la pile à combustible 16 est une unité génératrice électrochimique à combustible gazeux par réaction d'oxydoréduction entre un premier fluide et un deuxième fluide.

Dans l'exemple décrit, le premier fluide, c'est-à-dire le combustible, est le dihydrogène et le deuxième fluide, c'est-à-dire l'oxydant, est le dioxygène présent dans l'air entourant la structure.

Avantageusement, la pile à combustible 16 est une pile utilisant la technologie à membrane d'échange de protons (plus souvent désignée sous l'abréviation PEM renvoyant à la dénomination anglaise de « Proton Exchange Membrane »).

Selon l'exemple décrit, le combustible est du dihydrogène.

Le véhicule 10 est ainsi un véhicule à hydrogène.

Comme cela sera détaillé ultérieurement, en plus de ces fonctions de véhicule 10, le véhicule 10 présente également une fonction d'alimentation en électricité. Le véhicule 10 est ainsi utilisable comme source d'électricité autonome.

Une source d'électricité est propre à produire de l'électricité sur une sortie.

En l'espèce, la source d'électricité peut être qualifiée de groupe électrogène, c'est-à-dire de dispositif autonome capable de produire de l'électricité. Un groupe électrogène est ainsi une station de production d'électricité autonome, mobile et silencieuse.

Le terme « groupe électrogène » est à entendre ici dans son acceptation la plus large comme englobant aussi les groupes électrogènes ne comportant pas de moteur.

Du fait de cette fonctionnalité du véhicule 10, le véhicule 10 comporte une pluralité d'éléments 18 présentant un premier mode de fonctionnement et un deuxième mode de fonctionnement.

Le premier mode de fonctionnement correspond à un fonctionnement de véhicule 10 et le deuxième mode de fonctionnement correspond à un fonctionnement de groupe électrogène.

Dans le fonctionnement de groupe électrogène, la pile à combustible 16 est autonome au sens où elle ne fait pas l'objet d'un contrôle par un système extérieur.

Selon l'exemple décrit, le véhicule 10 comporte également un système de contrôle 20, le système de contrôle 20 étant propre à faire basculer les éléments d'un mode de fonctionnement à l'autre mode de fonctionnement.

Le système de contrôle 20 est, par exemple, un calculateur embarqué.

Le système de contrôle 20 est un dispositif électronique propre à manipuler et/ou transformer des données représentées comme des quantités électroniques ou physiques dans des registres et/ou des mémoires en d'autres données similaires correspondant à des données physiques dans des mémoires, des registres ou d'autres types de dispositifs d'affichage, de transmission ou de mémorisation.

Le système de contrôle 20 comporte un processeur comprenant une unité de traitement de données, des mémoires et un lecteur de support d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « floppy disk »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'étapes du procédé.

En variante, le système de contrôle 20 fait partie de l'ensemble.

Selon l'exemple décrit, le système de contrôle 20 est aussi propre à contrôler l'ensemble des autres éléments impliqués dans l'utilisation en tant que source d'électricité.

Notamment, le système de contrôle 20 est en communication avec les différents composants de l'ensemble 12.

Le véhicule 10 comporte un circuit d'alimentation 22 et un circuit de distribution 24.

Le circuit d'alimentation 22 est un circuit d'alimentation en combustible alimentant la pile à combustible 16.

Le circuit d'alimentation 22 est, selon l'exemple décrit, un ensemble de conduits propres à transporter du gaz.

Le circuit de distribution 24 est un circuit de distribution électrique.

Le circuit de distribution 24 sert ainsi à alimenter l'ensemble des éléments du véhicule 10 ayant besoin d'électricité pour fonctionner.

Le circuit de distribution 24 est alimenté par la pile à combustible 16.

Le circuit de distribution 24 est, selon l'exemple décrit, un circuit continu délivrant une tension de plus de 100 V.

Dans certains modes de réalisation, le circuit de distribution 24 est, en outre, alimenté par d'autres sources d'alimentation, telles qu'une batterie ou qu'un superconducteur.

Le véhicule 10 comporte, en outre, une entrée d'insertion 26 et une sortie électrique 28.

L'entrée d'insertion 26 est une entrée d'insertion du combustible.

A ce titre, l'entrée d'insertion 26 est connectée au circuit d'alimentation 22.

L'entrée d'insertion 26 est une entrée spécifique dédiée pour l'utilisation en groupe électrogène.

L'entrée d'insertion 26 est destinée à être alimentée depuis l'extérieur du véhicule 10.

La sortie électrique 28 est une sortie connectée au circuit de distribution du véhicule 10.

La sortie électrique 28 est ainsi connectée à la sortie de la pile à combustible 16.

L'ensemble 12 est un ensemble d'éléments qui interagissent avec le véhicule 10 à pile à combustible utilisable comme groupe électrogène.

Selon l'exemple décrit, l'ensemble 12 permet d'alimenter la pile à combustible 16 et de collecter l'électricité produite.

Plus précisément, l'ensemble 12 comporte un système d'alimentation 30 et un circuit de restitution 32.

Il convient de noter ici que l'ensemble 12 est extérieur au véhicule 10, de sorte que chaque élément de l'ensemble 12 n'est pas un élément du véhicule 10 et est extérieur au véhicule 10, c'est-à-dire est un élément externe ou situé en dehors du volume interne du véhicule 10.

En particulier, le système d'alimentation 30 et le circuit de restitution 32 sont extérieurs au véhicule 10 à pile à combustible 16.

Le système d'alimentation 30 et le circuit de restitution 32 ne sont donc pas des éléments du véhicule 10 utilisés dans le mode de premier fonctionnement.

Néanmoins, le système d'alimentation 30 est destiné à être raccordé au véhicule 10 à pile à combustible et le circuit de restitution 32 est destiné à être relié au véhicule 10 à pile à combustible.

Le système d'alimentation 30 est un système d'alimentation en combustible de la pile à combustible 16.

Le système d'alimentation 30 est ainsi propre à alimenter en combustible la pile à combustible 16.

Le système d'alimentation 30 en combustible est raccordé par un conduit à l'entrée d'insertion 26.

Le système d'alimentation 30 comporte au moins un réservoir 34 et un circuit de contrôle 36.

Le réservoir 34 est un réservoir en combustible.

Par exemple, le réservoir 34 est une bonbonne de dihydrogène.

Le nombre de réservoirs 34 utilisés dépend de la quantité d'électricité à produire.

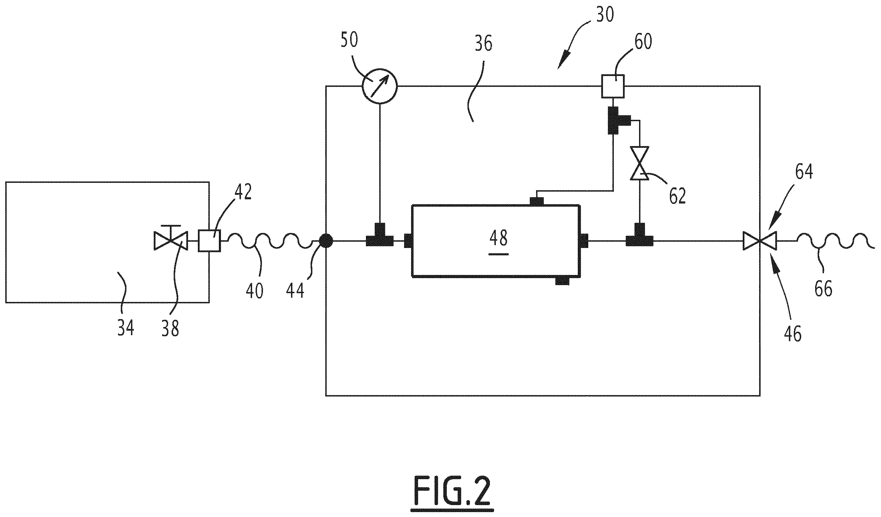

Comme visible sur la figure 2, le réservoir 34 est relié au circuit de contrôle 36 par une vanne manuelle 38 reliée à un premier conduit flexible 40 à travers un évent 42.

Le circuit de contrôle 36 est un circuit de contrôle de la quantité de combustible délivrée par le système d'alimentation 30.

Cela signifie que le circuit de contrôle 36 est propre à envoyer une quantité définie de combustible en sortie du système d'alimentation 30.

Un exemple spécifique de circuit de contrôle 36 est représenté plus spécifiquement à la figure 2, cet exemple étant non limitatif.

Le circuit de contrôle 36 a la forme d'un coffret et sert également d'interface avec le véhicule 10.

Le circuit de contrôle 36 comporte une entrée 44 et une sortie 46.

L'entrée 44 du circuit de contrôle 36 est reliée au réservoir 34 par le premier conduit flexible 40.

Le circuit de contrôle 36 comporte une unité de régulation de pression 48, l'unité de régulation 48 étant propre à diminuer très fortement la pression d'un fluide incident, typiquement d'un facteur au moins 20.

Selon l'exemple de la figure 2, la pression en entrée est mesurée à l'aide d'un capteur de pression 50 (ici un manomètre).

Pour diminuer la pression, l'unité de régulation 48 est en liaison fluidique avec un évent 60 et une vanne de purge 62.

La sortie 46 du circuit de contrôle 36 est ici une vanne 64 en liaison avec un deuxième conduit flexible 66

Le système d'alimentation 30 est raccordé au circuit d'alimentation 22 via l'entrée d'insertion 26 par l'intermédiaire du deuxième conduit flexible 66.

Le circuit de restitution 32 est un circuit de restitution de l'énergie électrique produite par la pile à combustible 16.

Le circuit de restitution 32 est ainsi propre à collecter l'électricité produite sur la sortie électrique 28 du véhicule 10 à pile à combustible et à la transformer éventuellement pour obtenir le signal électrique souhaité en sortie. La sortie du circuit de restitution est ainsi la sortie du groupe électrogène.

Selon l'exemple décrit, le circuit de restitution 32 comporte un câble électrique 68 et un onduleur 70.

Le circuit de restitution 32 est raccordé au circuit de distribution 24.

Dans le cas de figure 1, le circuit de restitution 32 est raccordé par le câble électrique 68 à la sortie électrique 28.

L'onduleur 70 sert à transformer une tension continue en tension alternative.

L'onduleur 70 est ici un onduleur triphasé pour fournir trois phases comme un réseau électrique courant.

Le fonctionnement du véhicule 10 et de l'ensemble 12 est maintenant décrit en référence à une utilisation spécifique du véhicule 10.

Le véhicule 10 est supposé à l'arrêt.

L'utilisateur vient alors raccorder d'une part le système d'alimentation 30 à l'entrée d'insertion 26 et d'autre part le circuit de restitution 32 à la sortie électrique 28.

L'utilisateur demande ensuite au système de contrôle 20 de faire basculer les éléments 18 du véhicule 10 ayant deux modes de fonctionnement dans le deuxième mode de fonctionnement.

Le système stationnaire formé par l'ensemble et le véhicule 10 à l'arrêt réalise ainsi une fonction de groupe électrogène.

Ce groupe électrogène ainsi réalisé est un groupe zéro-émission, car ne produisant pas de carbone.

Le groupe électrogène présente une puissance électrique relativement forte, dans la mesure où il est exploité une grande partie de la puissance de la pile à combustible 16 embarquée dans le véhicule 10.

L'autonomie du groupe électrogène est élevée et est, en outre, adaptable aux besoins de l'utilisateur. En effet, il suffit d'adapter la quantité de combustible.

Il peut être noté que les modes de réalisation présentés précédemment correspondent à un véhicule 10 à pile à combustible amélioré dans la mesure où il permet à l'utilisateur du véhicule 10 de bénéficier d'une fonctionnalité supplémentaire.

De manière réciproque, il peut être considéré que c'est un groupe électrogène amélioré puisqu'il dispose d'un véhicule 10. En ce sens, l'utilisation décrite peut également être interprétée comme un groupe électrogène comportant un véhicule 10.

D'autres modes de réalisation sont envisageables.

En particulier, au lieu d'un onduleur triphasé, le circuit de restitution 32 pourrait comporter un onduleur monophasé ou un chargeur bidirectionnel.

En outre, en variante ou en complément, il est envisageable que le circuit de restitution 32 soit interne au véhicule 10.

## Revendications

1. Utilisation d'un véhicule à pile à combustible (10) comme source d'électricité autonome, la source d'électricité étant de préférence un groupe électrogène, l'utilisation comportant l'emploi d'un système d'alimentation en combustible (30) de la pile à combustible (16) extérieur au véhicule à pile à combustible (10).

2. Utilisation selon la revendication 1, dans laquelle l'utilisation comporte l'emploi d'un circuit de restitution (32) de l'énergie électrique produite par la pile à combustible (16).

3. Utilisation selon la revendication 2, dans laquelle le circuit de restitution (32) de l'énergie électrique est extérieur au véhicule à pile à combustible (10).

4. Utilisation selon l'une quelconque des revendications 1 à 3, dans laquelle le système d'alimentation en combustible (30) comporte au moins un réservoir en combustible (34) et un circuit de contrôle (36) de la quantité de combustible délivrée par le système d'alimentation en combustible.

5. Utilisation selon l'une quelconque des revendications 2 à 4, dans laquelle le circuit de restitution (32) de l'énergie électrique comporte un onduleur (70), en particulier un onduleur triphasé.

6. Utilisation selon l'une quelconque des revendications 1 à 5, dans laquelle le véhicule à pile à combustible (10) comporte un circuit d'alimentation en combustible (22) alimentant la pile à combustible (16), le système d'alimentation en combustible (30) étant raccordé au circuit d'alimentation en combustible (22).

7. Utilisation selon la revendication 6, dans laquelle le véhicule à pile à combustible (10) comporte une entrée d'insertion (26) du combustible, le système d'alimentation en combustible (22) étant raccordé par un conduit à l'entrée d'insertion (26).

8. Utilisation selon l'une quelconque des revendications 2 à 7, dans laquelle le véhicule à pile à combustible (10) comporte un circuit de distribution électrique (24) alimenté par la pile à combustible (16), le circuit de restitution (32) de l'énergie électrique étant raccordé au circuit de distribution électrique (24) de la pile à combustible (16).

9. Utilisation selon la revendication 8, dans laquelle le véhicule à pile à combustible (10) comporte une sortie électrique (28) connectée au circuit de distribution électrique (24), le circuit de restitution (32) de l'énergie électrique étant raccordé par un câble électrique (68) à la sortie électrique (28).

10. Utilisation selon l'une quelconque des revendications 1 à 9, dans laquelle le véhicule à pile à combustible (10) comporte une pluralité d'éléments (18) présentant un premier mode de fonctionnement et un deuxième mode de fonctionnement, l'utilisation comportant l'emploi d'un système de contrôle (20), le système de contrôle (20) étant propre à faire basculer les éléments (18) d'un mode de fonctionnement à l'autre mode de fonctionnement, le premier mode de fonctionnement correspondant à un fonctionnement de véhicule à pile à combustible (10) et le deuxième mode de fonctionnement correspondant à un fonctionnement de source d'électricité autonome.

11. Utilisation selon l'une quelconque des revendications 1 à 10, dans laquelle le combustible est du dihydrogène.

12. Source d'électricité autonome, la source d'électricité étant de préférence un groupe électrogène, comportant un véhicule à pile à combustible (10).

13. Véhicule à pile à combustible (10) comportant une pluralité d'éléments (18) présentant un premier mode de fonctionnement et un deuxième mode de fonctionnement, le premier mode de fonctionnement correspondant à un fonctionnement de véhicule à pile à combustible (10) et le deuxième mode de fonctionnement correspondant à un fonctionnement de source d'électricité autonome.

14. Ensemble (12) interagissant avec un véhicule à pile à combustible utilisable (10) comme source d'électricité autonome, l'ensemble (12) comportant un système d'alimentation en combustible (30) de la pile à combustible (16) destiné à être raccordé au véhicule à pile à combustible (10) et un circuit de restitution (32) de l'énergie électrique produite par la pile à combustible (16) destiné à être relié au véhicule à pile à combustible (10).
